# EUROPEAN PATENT APPLICATION

(11) **EP 1 562 024 A2**
(43) Date of publication of application: **10.08.2005**
(21) Application number: 04014515.3
(22) Date of filing: 21.06.2004
(51) Int. Cl.: G01D 5/20

(54) **Variable-reluctance resolver and method and apparatus for manufacturing the same**

(30) Priority: 03.02.2004 JP 2004027076
(71) Applicant: Minebea Co., Ltd., Kitasaku-gun, Nagano-ken (JP)
(72) Inventor: Miya, Taiichi, 4-18-18 Omori-nishi Ota-ku Tokyo (JP)
(74) Representative: Hoarton, Lloyd Douglas Charles

(57) **Abstract**

A VR resolver includes a rotor having a rotary shaft portion and a salient pole portion formed integrally. The salient pole portion assumes an arbitrary salient pole profile. Two or more salient pole portions may be formed on the rotary shaft portion along the length of the rotary shaft portion. The salient pole portion may be a bulged portion of the rotary shaft portion. The bulge portion may assume a rounded shape or a plate-like shape.

## Description

### BACKGROUND OF THE INVENTION

### Field of the Invention:

The present invention relates to a variable reluctance (VR) resolver and to a method and an apparatus for manufacturing the same. More particularly, the invention relates to a VR resolver in which a rotary shaft portion and a rotor portion are formed integrally to thereby eliminate the need for conventionally practiced positioning work and assembling work between a rotary shaft and a rotor, thereby facilitating manufacture of the same and enhancing positioning accuracy, as well as to a method and an apparatus for manufacturing the same.

### Description of the Related Art:

Conventionally, a rotor of a VR resolver is formed as follows. A required amount of silicon steel pieces are blanked from a silicon steel sheet and are fixedly laminated into the shape of the rotor. Alternatively, a magnetic powder of metal is formed into the shape of the rotor through compaction or sintering.

A rotary shaft is fitted; for example, press-fitted or shrink-fitted, into a through-hole of the thus-formed rotor. The resultant assembly is housed within a stator. In the case where a rotary shaft is press-fitted into a through-hole of a rotor, the rotary shaft and the through-hole must be finished with high dimensional accuracy in order to provide an appropriate interference for press fitting; thus, the number of working steps increases. In the case where a rotary shaft is shrink-fitted into a through-hole of a rotor, the rotor must be heated to a temperature of about 300°C in a furnace; thus, a heating process must be additionally employed.

Furthermore, since a limitation is imposed on a rotary shaft which is fixedly fitted into a through-hole of a rotor, a reduction in the size of the rotor; i.e., rotor size cannot be reduced to a considerable extent. Particularly, in the case of a rotor having a salient pole for a shaft angle multiplier of 1X, the center of a through-hole of the rotor is greatly biased from the center of the rotor. Thus, the shortest distance between the circumference of the through-hole and the periphery of the salient pole, and consequently the strength of a portion of the rotor corresponding to the shortest distance, impose limitation on manufacture of the rotor in terms of a reduction in the size of the rotor.

Meanwhile, there has been an increasing demand to reduce the size of a VR resolver while maintaining the strength of its rotor and securing a dimension which enables manufacture of the rotor. A conceivable example of a VR resolver of reduced size is as follows: the outside diameter of a stator is 9 mm; the diameter of a rotor is 3 mm; and the diameter of a shaft is 1 mm to 2 mm.

A conceivable solution to such a latent problem is to reduce the diameter of a through-hole of a rotor into which a rotary shaft is to be fitted. However, reducing the diameter of the through-hole means that the diameter of the rotary shaft is also reduced. As a result, the strength of the rotary shaft may become insufficient for practical use.

A silicon steel sheet laminate is not a practical structure for a small-sized rotor, since manufacture of such a rotor is difficult in terms of working accuracy, and aligning work is difficult.

Also, compacting a magnetic powder of metal into a rotor is not a practical method of manufacture, since cost is high, and attachment of the rotor to a rotary shaft is required.

Meanwhile, Japanese Patent Application Laid-Open (*kokai*) No. 10-170306 describes application of integral formation to the rotor structure of a resolver.

The patent publication discloses a rotor structure of a resolver for solving the following problems involved in a conventional rotor structure. Conventionally, a rotary shaft and a rotor transformer for power winding are formed as separate components and fixed together by use of, for example, adhesive. Thus, work efficiency is low, and there is a risk of the rotary shaft and the rotor transformer becoming separated during rotation. According to the patent publication, a hollow rotary shaft and a rotor transformer, which serves as a coil bobbin, are formed integrally by cutting operations.

The rotor structure of a resolver disclosed in the patent publication is still not practical, in view of the following:
(a) the rotary shaft is formed integrally with the rotor transformer for power winding, not with a rotor having a salient pole;
(b) the rotor, which is formed separately from the rotary shaft, assumes the form of a laminated core and is fixedly attached to the rotary shaft by use of, for example, adhesive as in the case of a conventional rotor; and
(c) since the rotor transformer is formed by cutting operations, the rotor transformer can only assume the form of, for example, a disk or a column, which has a fixed radius and can be formed by simple machining operations as on a lathe or the like, and is not intended to have a delicate salient pole profile for a shaft angle multiplier of nX (n is an integer equal to or greater than one).

### SUMMARY OF THE INVENTION

In view of the above drawbacks in the conventional variable reluctance resolver, an object of the present invention is to provide a variable reluctance resolver in which a rotor can assume any shape and can be reduced in size, as well as a method and an apparatus for manufacturing the same.

In order to achieve the above object, the present invention employs the configuration of a VR resolver in which a rotary shaft portion and a rotor portion are formed integrally.

Also, the present invention employs a manufacturing method suited for integrally forming the rotary shaft portion and the rotor portion.

Specifically, the present invention provides a variable reluctance resolver comprising a rotor having a rotary shaft portion and a salient pole portion formed integrally. The salient pole portion may assume an arbitrary salient pole profile. Two or more salient pole portions may be formed on the rotary shaft portion along the length of the rotary shaft portion. The salient pole portion may be a portion of the rotary shaft portion that is caused to bulge and assumes the form of a bulge. The bulge may assume a plate-like shape.

The present invention further provides a method for manufacturing the above variable reluctance resolver by integrally casting the rotary shaft portion and the salient pole portion.

The present invention further provides a method for manufacturing the above variable reluctance resolver by integrally sintering the rotary shaft portion and the salient pole portion.

The present invention further provides a method for manufacturing the above variable reluctance resolver by forging a rod piece into the rotor having the rotary shaft portion and the salient pole portion formed integrally.

The present invention further provides an apparatus for manufacturing the above variable reluctance resolver through swaging. The apparatus comprises a die having an concave portion corresponding to the salient pole portion. The concave portion faces a through-hole formed in the die. A rod piece is inserted into the through-hole and is subjected to swaging.

The rotor of the VR resolver of the present invention is configured such that the rotary shaft portion and the salient pole portion are formed integrally, thereby allowing a reduction in size and cost. Since the rotary shaft portion and the salient pole portion are formed integrally, the rotary shaft portion and the salient pole portion have the same temperature characteristics, thereby lessening thermal distortion. Since no joint is involved, resistance to vibration is enhanced. Thus, when used as a sensor with, for example, a small-sized (e.g., 10 mm in diameter) servomotor that requires a sensor resistant to the environment, the range of application as a sensor expands (e.g., applicable temperature: 40°C to 110°C; applicable vibration(acceleration of gravity): 50 G to 100 G).

When a resolver is configured such that a plurality of resolver units (each resolver unit consists of a stator and a rotor) are formed on a single rotary shaft, the resolver can measure a plurality of values of, for example, torsional strain.

The rotor can be readily manufactured by use of various means such as casting, forging, sintering, and punch-deforming for integrally forming the rotary shaft portion and the salient pole portion.

The present invention provides teachings on accurate formation of a bulge on a rod piece in an integral manner and on a method for performing such formation, and thus can be applied to other similar mechanical structures.

### BRIEF DESCRIPTION OF THE DRAWINGS

Various other objects, features and many of the attendant advantages of the present invention will be readily appreciated as the same becomes better understood by reference to the following detailed description of the preferred embodiments when considered in connection with the accompanying drawings, in which:
FIGS. 1A to 1C are configurational views showing Example 1 of swaging for forming a rotor of the present invention having one integrally formed salient pole portion (an example of a rounded bulge);
FIGS. 2A to 2C are configurational views showing Example 2 of swaging for forming a rotor of the present invention having one integrally formed salient pole portion (an example of a plate-shaped bulge);
FIGS. 3A to 3F are configurational views showing Example 3 of swaging for forming a rotor of the present invention having one integrally formed salient pole portion (an example of a plate-shaped bulge);
FIGS. 4A to 4C are configurational views showing an example of die-forging for forming a rotor of the present invention having one integrally formed salient pole portion (an example of a rounded bulge);
FIGS. 5A to 5G are views for explaining a process of manufacturing a rotor of the present invention having a rotary shaft portion and two salient pole portions formed integrally;
FIGS. 6A and 6B are configurational views showing a rotor of the present invention formed through punch-deforming operations; and
FIG. 7 is a configurational view showing a VR resolver of the present invention having a rotary shaft portion and a plurality of salient pole portions formed integrally.

### DESCRIPTION OF THE PREFERRED EMBODIMENTS

The rotor of a VR resolver of the present invention is configured such that a rotary shaft portion and a salient pole portion are formed integrally. A method for manufacturing the VR resolver of the present invention can employ any of various processes of forming a rod piece into the rotor having a rotary shaft portion and a salient pole portion formed integrally.

### Forging

A rotary shaft portion and a salient pole portion of the rotor are formed integrally from a magnetic material by means of forging. Examples of such a magnetic material include carbon steel (e.g., S45C), silicon steel (e.g., grain-oriented silicon steel), and Permalloy. In the case where carbon steel is used, since carbon steel is lower in energy conversion efficiency than other materials in terms of conversion of variations in a gap between magnetic poles into an electrical signal, an output signal is amplified.

Forging is classified into hot forging and cold forging, according to whether heat is applied or not. Forging is also classified into lump forging (one-time forging) and successive forging, according to the range of a single forging operation. In successive forging, forging is performed successively by a predetermined section. A lump forging process includes a preforging step and a finish-forging step and, as needed, further includes a trimming step or a machining step performed subsequent to the finish-forging step. The preforging step serves as a first step of closed die forging and is performed on a square billet, a bar billet, or a round billet, which are of carbon steel for general structure, silicon steel, Permalloy, or a like material and which, as needed, has undergone roll forming or bending. The finish-forging step serves as a second step of closed die forging. These steps can be modified as appropriate. Examples of swaging will be described below.

### Embodiment 1:

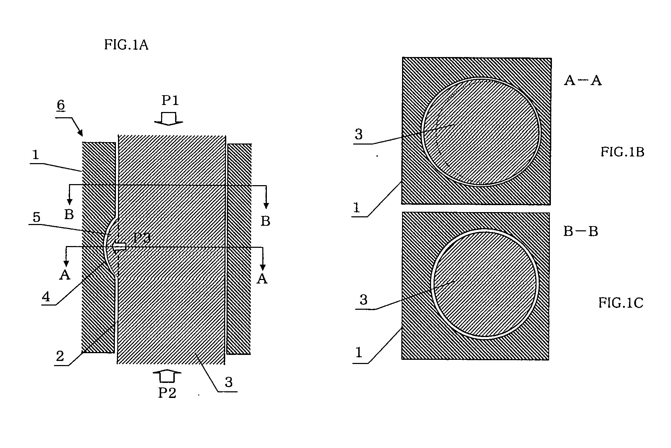

FIG. 1 is a series of configurational views showing Example 1 of swaging for forming a rotor of the present invention having one integrally formed salient pole portion (an example of a rounded bulge).
FIG. 1A is a sectional view showing an apparatus for use in a swaging step; FIG. 1B is a sectional view taken along a line A―A of FIG. 1A, which passes through the center of the bulge; FIG. 1C is a sectional view taken along a line B―B of FIG. 1A, which extends off the bulge.

A rod piece 3 that has a substantially uniform diameter along its length is inserted into a die 1 of a swaging apparatus 6.

As shown in FIG. 1A, the die 1 includes a through-hole 2 extending vertically and having a diameter slightly greater than that of the rod piece 3, and an concave portion 4 that is formed on the wall surface of the through-hole 2 at a substantially central position in the vertical direction. As viewed on a section cut by a plane that extends vertically (longitudinally) and passes through the deepest portion of the concave portion 4, the concave portion 4 assumes an arcuate shape. As shown in FIG. 1B, a sectional view taken along a line A―A of FIG. 1A, the concave portion 4 assumes a substantially elliptic shape (its radius varies in a sinusoidal manner) whose center is biased from that of the through-hole 2.

Two punches (not shown) apply respective forces vertically (longitudinally); i.e., in the directions of arrows P1 and P2, to the rod piece 3 inserted in the through-hole 2 of the die 1. As a result, a portion of the rod piece 3 bulges in the direction of an arrow P3 and fills the concave portion 4, thereby forming a bulge 5. Subsequently, the die 1 is opened, and the rod piece 3 having the bulge 5 is removed from the die 1. Notably, a bulge refers to a portion of a workpiece that has been caused by pressing means or the like to bulge (swell) from the original surface of the workpiece.

When the thus-formed rod piece 3 is used as a rotor having an integrally formed salient pole portion, the bulge 5 serves as a salient pole. Since magnetic flux passes along a path of lower reluctance, magnetic flux passes along the top of the bulge 5, which is most distant from the axis of the rotor. When the bulge 5 is profiled such that the distance to the rotor axis continuously increases in an angular range of 180 degrees as measured around the rotor axis and continuously decreases in the remaining range of 180 degrees as measured around the rotor axis, a change in reluctance can be output in relation to the rotational angle of the rotor. Preferably, reluctance varies with the rotational angle of the rotor in a sinusoidal manner.

The above-mentioned swaging process allows formation of a rotor in a smaller number of steps.

### Embodiment 2:

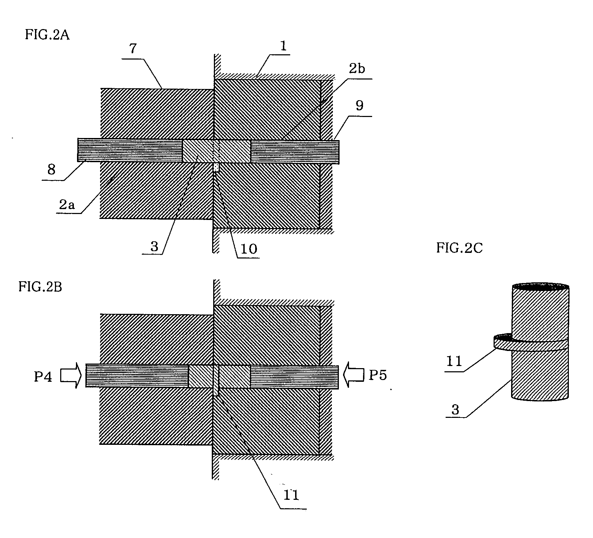

FIG. 2 is a series of configurational views showing Example 2 of swaging for forming a rotor of the present invention having one integrally formed salient pole portion (an example of a plate-shaped bulge).

FIG. 2A is a sectional view of a swaging apparatus of Example 2, showing a state before application of pressure; FIG. 2B is a sectional view of the swaging apparatus of Example 2, showing a state after application of pressure; and FIG. 2C shows a completed product.

A punch 7 has a through-hole 2a into which the rod piece 3 is inserted. An insert punch 8 is inserted into the through-hole 2a.

The die 1 has a through-hole 2b into which the rod piece 3 is inserted. A concave portion 10 is formed integral with the through-hole 2b on the end surface of the die 1 located on the side toward the punch 7. A knockout pin 9 is inserted into the through-hole 2b.

The mutually facing end surfaces of the punch 7 and the die 1 are formed flat and come in close contact with each other while the respective through-holes 2a and 2b are aligned.

First, the rod piece 3 is inserted into the through-holes 2a and 2b. As shown in FIG. 2A, the insert punch 8 and the knockout pin 9 are brought in contact with the corresponding opposite ends of the rod piece 3.

Next, the insert punch 8 and the knockout pin 9 are pressed in the directions of arrows P4 and P5, respectively. As a result, a central portion of the rod piece 3 is extruded into and fills a space defined by the concave portion 10 and the end surface of the punch 7, to thereby be formed into a plate-shaped bulge 11 as shown in FIG. 2B. The peripheral edge of the plate-shaped bulge 11 assumes a substantially elliptic shape (its radius varies in a sinusoidal manner) whose center is biased from that of the rod piece 3.

Subsequently, the die 1 and the punch 7 are separated to thereby remove the resultant rotor having the plate-shaped bulge 11 shown in FIG. 2C.

When the plate-shaped bulge 11 is profiled such that the distance to the rotor axis continuously increases in an angular range of 180 degrees as measured around the rotor axis and continuously decreases in the remaining,range of 180 degrees as measured around the rotor axis, a change in reluctance can be output in relation to the rotational angle of the rotor. Preferably, reluctance varies with the rotational angle of the rotor in a sinusoidal manner.

The above-mentioned swaging process allows formation of a rotor having a salient pole portion in an arbitrary shape in a smaller number of steps.

### Embodiment 3:

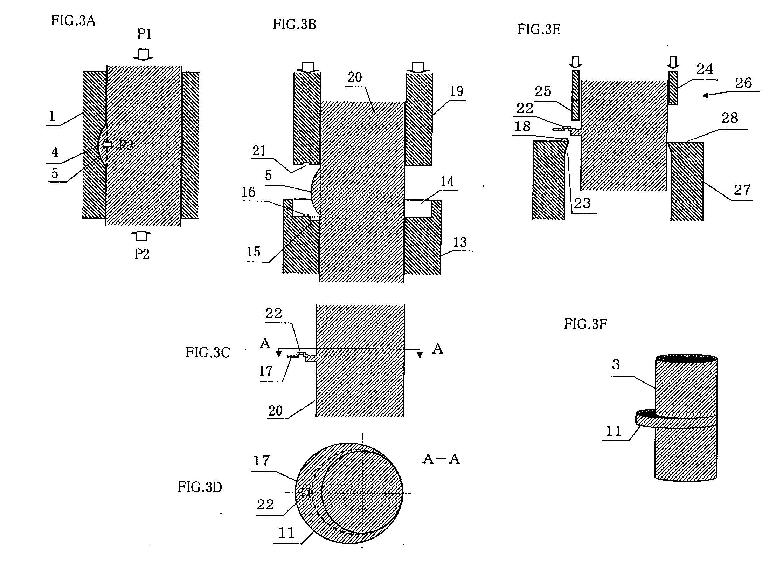

FIG. 3 is a series of configurational views showing Example 3 of swaging for forming a rotor of the present invention having one integrally formed salient pole portion (an example of a plate-shaped bulge).
FIG. 3A is a sectional view showing step (1) for forming a rod piece into an intermediate workpiece having a rounded bulge;
FIG. 3B is a sectional view showing step (2) for forming the intermediate workpiece having a rounded bulge into an intermediate workpiece having a plate-shaped bulge;
FIG. 3C is a sectional view of the intermediate workpiece obtained in step (2);
FIG. 3D is a sectional view taken along a line A―A of FIG. 3C;
FIG. 3E is a sectional view showing step (3) for finishing the intermediate workpiece of FIG. 3C; and
FIG. 3F is a perspective view showing a completed product.

### Step (1):

The rod piece 3 is formed into an intermediate workpiece 20 having the integrally formed rounded bulge 5. Step (1) is similar to the step shown in FIG. 1A.

### Step (2):

A die 13 is configured such that a salient pole-forming concave portion 15 and a positioning projection 16 are formed on a cavity 14.

The salient pole-forming concave portion 15 is formed to a predetermined depth deeper than the bottom surface of the cavity 14 and extends along the circumferential surface of the rod piece 3 inserted into the die 13. In Embodiment 3, the salient pole profile is of a single salient pole (a shaft angle multiplier of 1X). However, the salient pole profile can be formed so as to correspond to any shaft angle multiplier as needed. The positioning projection 16 is formed on the bottom surface of the cavity 14 in the proximity of the salient pole-forming concave portion 15 that is located most distant from the axis of the die 13. The positioning projection 16 is used to form a positioning portion on a burr 17 that is formed when the bulge 5 is flattened through press-forming. When the burr 17 is to be trimmed off by use of another press die, the positioning portion formed on the burr 17 is used for positioning the intermediate workpiece 20 so as not to accidentally trim off a formed salient pole portion.

A punch 19 is formed in such a manner as to be insertable into the cavity 14. A positioning recess 21 is formed on the end surface of the punch 19 and is loosely engaged with the positioning projection 16.

As shown in FIG. 3B, the intermediate workpiece 20 having the bulge 5 is set between the die 13 and the punch 19 in such a manner that the bulge 5 is aligned with the salient pole-forming concave portion 15 within the cavity 14.

In the above-mentioned state, the punch 19 is pressed downward to thereby flatten the rounded bulge 5. Subsequently, the punch 19 is returned to its original position. The intermediate workpiece 20 having the plate-shaped bulge 11 and the burr 17 formed integrally is removed from the die 13. The thus-formed intermediate workpiece 20 is shown in FIGS. 3C and 3D. In FIG. 3D, which is a sectional view taken along a line A―A of FIG. 3C, the innermost circular solid line represents the circumference of the rod piece 3; the intermediate elliptic dashed line represents the periphery of the plate-shaped bulge 11; and the outermost solid line represents the periphery of the burr 17. A cap-like portion 22 is a portion of the burr 17 that is formed by means of the positioning projection 16 of the die 13 and the positioning recess 21 of the punch 19.

### Step (3):

A punching die used in the present finishing step consists of a male die 26 and a female die 27.

The female die 27 has a punching hole 23 extending therethrough, and a positioning projection 18 is formed on the end surface 28 of the female die 27 in the vicinity of the punch hole 23.

The male die 26 includes a trunk portion 24 that has a predetermined wall thickness and encircles a rod portion of the set intermediate workpiece 20, and a punch portion 25 that extends from the trunk portion 24 toward the female die 27 along the surface of the rod portion.

The punch portion 25 is formed in such a manner as to coincide with the shape of the plate-shaped bulge 11, which will become a salient pole portion.

The intermediate workpiece 20 having the burr 17 of FIG. 3C is set in the female die 27 in such a manner that the cap-like portion 22 of the intermediate workpiece 20 is fitted to the positioning projection 18.

When the male die 26 is pressed downward, the punch portion 25 causes the intermediate workpiece 20 having the plate-shaped bulge 11 to drop while the burr 17 is left behind.

As shown in FIG. 3F, the thus-completed product is a rod piece 3 having the plate-shaped bulge 11, which will serve as a salient pole portion.

The above-mentioned swaging process allows accurate formation of a rotor having a salient pole portion in an arbitrary shape in a smaller number of steps.

### Embodiment 4:

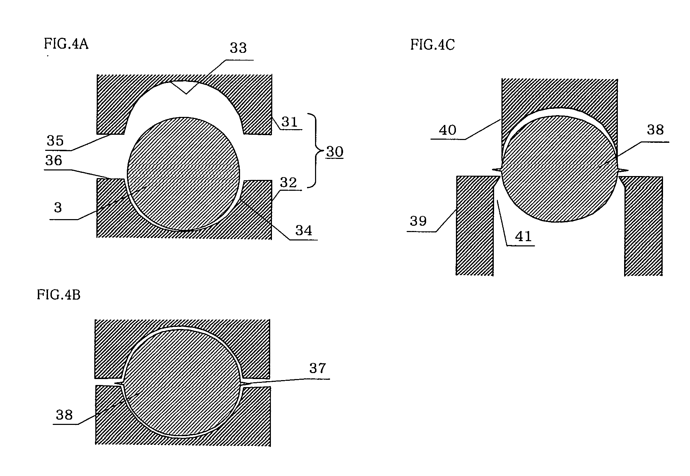

FIG. 4 is a series of configurational views showing an example of die-forging for forming a rotor of the present invention having one integrally formed salient pole portion (an example of a rounded bulge);
FIG. 4A is a view showing a state in which a rod piece is set between an upper die and a lower die of a die-forging machine;
FIG. 4B is a view showing a state in which the rod piece is subjected to die-forging on the die-forging machine; and
FIG. 4C is a view showing a state in which burr is to be trimmed off.

In a die-forging machine, a concave portion 33 of an upper die 31 and a concave portion 34 of a lower die 32 are formed symmetrically in relation to a horizontal surface 35 of the upper die 31 and a horizontal surface 36 of the lower die 32 as viewed when the upper and lower dies 31 and 32 are closed together. The concave portions 33 and 34 are shaped in such a manner as to correspond to upper and lower halves of a rotor 38 that is the rod piece 3 having an integrally formed salient pole portion for a shaft angle multiplier of 1X.

First, as shown in FIG. 4A, the rod piece 3 having a cross-sectional area equivalent to that of the rotor 38 is placed in the concave portion 34 of the lower die 32 in an aligned manner. Next, as shown in FIG. 4B, the upper die 31 is pressed downward onto the lower die 32 in a closing manner. Thus, the rotor 38 is formed. In some cases, as shown in FIG. 4B, a burr 37 is created in a clearance between the upper and lower dies 31 and 32. The thickness of the burr 37 is reduced, by pressing the upper die 31 against the lower die 32, to such an extent as not to affect the shape of a salient pole portion at the time of trimming off the burr 37.

In the case where the burr 37 is created, as shown in FIG. 4C, the rotor 38 is placed on a female die 39 in such a manner that the rotor 38 is suspended in a punch hole 41 by means of the burr 37. A male die 40 whose width corresponds to the major width of the rotor 38 is pressed downward from above the rotor 38, whereby the body of the rotor 38 drops while the burr 37 is left behind.

The above-mentioned die-forging process allows formation of a rotor having an arbitrary cross-sectional shape in a smaller number of steps.

### Embodiment 5:

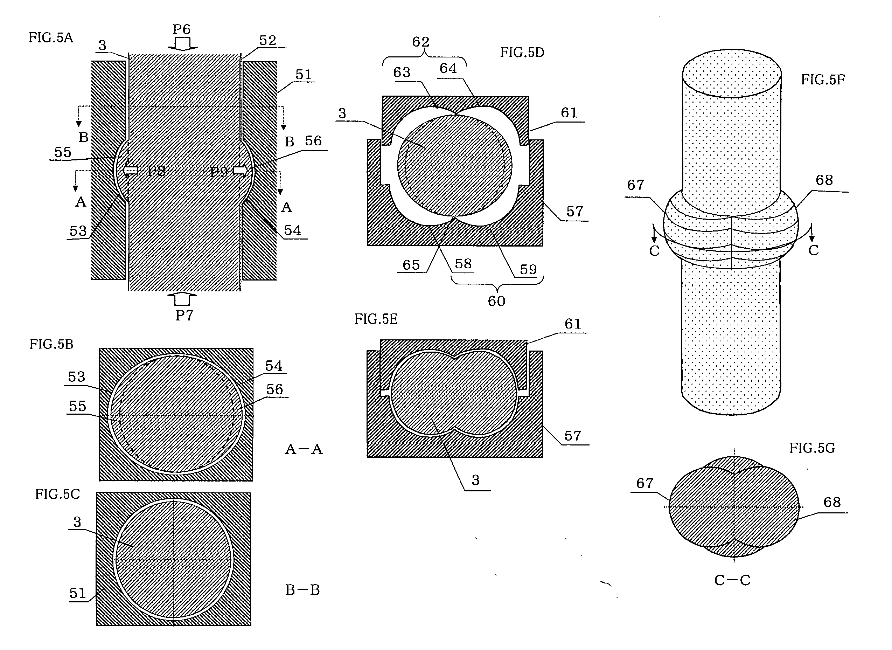

FIG. 5 is a series of views for explaining a process of manufacturing a rotor of the present invention having a rotary shaft portion and two salient pole portions formed integrally.
FIG. 5A is a sectional view of a swaging apparatus for forming a rotor having two bulges;
FIG. 5B is a sectional view taken along a line A―A of FIG. 5A;
FIG. 5C is a sectional view taken along a line B―B of FIG. 5A;
FIG. 5D is a sectional view showing a state in which a rotor having two bulges is set on a die-forging machine;
FIG. 5E is a view showing a state of die-forging;
FIG. 5F is a perspective view showing a completed rotor having two integrally formed salient pole portions; and
FIG. 5G is a sectional view taken along a line C―C of FIG. 5F.

In order to demonstrate that the present invention is applicable to form a rotor having two or more salient pole portions, Embodiment 5 shows an example formation of a rotor having two salient pole portions. In the case of a rotor having two or more salient pole portions, the width of a portion of the rotor as measured at the boundary of two adjacent salient pole portions become smaller than the diameter of a rod portion of the rotor. Thus, Embodiment 5 is characterized by requiring a step for squeezing a rod piece.

### Swaging Step:

In a die 51 for use in the initial step, concave portions 53 and 54 are formed on the wall surface of a through-hole 52. The concave portions 53 and 54 are shaped in such a manner as to correspond to the shape of two rounded bulges 55 and 56, which will be described later, formed on the rod piece 3.

As shown in FIG. 5A, the rod piece 3 is inserted into the through-hole 52 of the die 51. Vertical forces are applied to the rod piece 3 in compressing directions P6 and P7 so as to cause vertically intermediate portions of the rod piece 3 to bulge in directions of arrows P8 and P9, thereby symmetrically forming bulges 55 and 56 in such a manner that the bulges 55 and 56 fill the concave portions 53 and 54, respectively. As a result, as shown in FIG. 5C, a cross section of the rod piece 3 at a portion other than the bulges 55 and 56; i.e., a cross section of the rod piece 3 taken along a line B―B, has a fixed diameter. By contrast, as shown in FIG. 5B, a cross section taken along a line A―A passing through the respective tops of the bulges 55 and 56 assumes a substantially elliptic shape that bulges out beyond the circumference of the rod piece 3 represented by the dashed line. At this stage, the bulges 55 and 56 are smaller in size than corresponding salient pole portions.

In other words, two bulges 55 and 56, which are prototypes of corresponding salient pole portions (the bulges 55 and 56 are formed into respective salient pole portions in a later step), are axisymmetrically formed adjacent to each other on the rod piece 3.

### Die-Forging:

FIG. 5D is a sectional view of the rod piece 3 on which the bulges 55 and 56 are formed in the preceding step.

A double concave portion 60 is formed on a female die 57. The double concave portion 60 consists of a concave portion 58 and a concave portion 59, which are provided laterally in a continuous manner.

Also, a double concave portion 62 is formed on a male die 61. The double concave portion 62 consists of a concave portion 63 and a concave portion 64, which are identical to the concave portions 58 and 59 and are provided laterally in a continuous manner.

By combining the double concave portions 60 and 62, their constituent concave portions 58, 59, 63, and 64 form a shape corresponding to a salient pole portion for a shaft angle multiplier of 2X (i.e., a shape corresponding to a salient pole portion whose contour is formed such that reluctance between the salient pole portion and a stator's magnetic pole having output winding varies with the rotational angle of the rotor in a sinusoidal manner, two times per revolution).

The rod piece 3 is placed in the double concave portions 60 in such a manner that one end of a minor diametrical portion of the rod piece 3 rests on a central projection 65 of the double concave portion 60. While positioning is performed in a similar manner, the male die 61 is brought into contact with the rod piece 3 from above. Then, the male die 61 presses the rod piece 3 downward so as to squeeze the rod piece 3 as shown in FIG. 5E. FIG. 5F shows the thus-completed product. The sectional portion of the rod piece 3 shown in FIG. 5E corresponds to a sectional portion of the completed product taken along a line C―C of FIG. 5F passing through the respective tops of bulges 67 and 68 of the completed product. FIG. 5G is a sectional view taken along a line C―C of FIG. 5F. In FIG. 5G, a portion of the contour of the rounded bulges 67 and 68 that extends between the respective tops of the bulges 67 and 68 is formed into the shape of a salient pole profile for a shaft angle multiplier of 2X; i.e., formed such that the aforementioned reluctance varies with the rotational angle of the rotor in a sinusoidal manner.

In the completed state shown in FIGS. 5F and 5G, the salient pole portions assume the form of the rounded bulges 67 and 68. However, when a plate-like shape is to be imparted to the salient pole portions, the step of FIG. 3B is additionally performed after the process of FIG. 5.

When a burr is created in the stage of die-forging, the trimming step of FIG. 3E or 4C is additionally performed after the die-forging process.

The above-mentioned manufacturing method allows formation of a rotor having a salient pole portion in an arbitrary shape in a smaller number of steps.

### Casting and Sintering

A rotary shaft portion and a salient pole portion can be integrally formed into a rotary member from a magnetic material by means of casting or sintering.

In view of magnetic characteristics that a salient pole portion must exhibit, a cast material used to form a rotor must be improved in flexibility so as to avoid the property peculiar to castings of readily fracturing, and must be readily worked. Thus is preferred malleable cast iron or a ferrite-matrix cast iron that is obtained by heat-treating carbon-added spheroidal graphite cast iron.

As the size of a rotor decreases, a problem in the flow of a molten metal becomes prominent. Therefore, the position and the number of sprues must be selected appropriately. Particularly, a sprue must not be provided at a position corresponding to a salient pole portion, but must be provided at a position corresponding to a rotary shaft portion. Particularly preferably, a sprue is provided at a position corresponding to a portion of a rotor that does not face a magnetic pole of a stator. For example, a sprue is provided at each of positions corresponding to longitudinal opposite end portions of a rotary shaft portion and a central portion of the rotary shaft portion, which do not face a magnetic pole of a stator.

In the case where sintering; particularly, iron sintering, is used to form a rotor, a sintering density of about 7 g/cm³ is preferred. When a sintered alloy is to be used, the alloy is formed in such a manner as to predominantly contain iron and to be magnetic and resistant to vibration. A process similar to sintering is compacting, in which a magnetic powder material is compacted in a die under high pressure.

When casting or sintering is used to integrally form a rotary shaft portion and a salient pole portion from a magnetic material, an inexpensive magnetic material can be used in place of expensive magnetic steel sheets, thereby reducing material cost. In contrast to the conventional practice, a step of fitting a rotary shaft into a rotor is not involved, so that the number of manufacturing steps can be reduced, and manufacturing consumes less time.

### Cutting

A cutting machine, such as a lathe, is used to integrally form a rotary shaft portion and a salient-pole portion by cutting an ingot that is sufficiently large to integrally form the portions. The shape of a salient-pole portion is formed by use of a copying apparatus having a master formed to a shape for a required shaft angle multiplier of nX, or by use of a NC machine tool which operates in accordance with a program that represents the manufacturing steps.

In addition to cutting, for example, shearing, grinding, or shaping can be used as appropriate. In such machining processes, a workpiece is subjected to plastic deformation so as to separate an unnecessary portion therefrom.

By use of the above-mentioned existing cutting method or the above-mentioned existing machining method in which a workpiece is subjected to plastic deformation so as to separate an unnecessary portion therefrom, an existing fine machining technique can be used to finely machine a rotary shaft portion and a salient-pole portion.

### Punch-deforming

A punch having a predetermined shape is caused to abut, at a predetermined angle, the circumferential surface of a rod piece, which will become a rotary shaft portion and is of a magnetic material containing a predominant amount of iron. The punch is advanced (or punched). As a result, a portion of the rod piece in contact with the punch is dented to thereby serve as a deformation portion. In response to the action of the deformation portion, a portion of the rod piece on which an associated stress acts is caused to bulge, for example, in a direction substantially perpendicular to the abutting direction of the punch. The bulge is formed in such a manner that its contour serves as that of a salient pole portion. Thus is formed a rotor having a rotary shaft portion, a salient pole portion, and a deformation portion formed integrally.

The salient pole portion is shaped in such a manner as to correspond to the shape of a salient pole(s) for a shaft angle multiplier of nX (n is an integer of one or greater); i.e., the salient pole portion is shaped such that reluctance in relation to a stator's magnetic pole having output winding varies with the rotational angle of the rotor in a sinusoidal manner. In actuality, reluctance characteristics of a magnetic-pole winding are measured, and the shape of the salient pole portion is modified accordingly.

The shape of a salient pole portion depends on the shape of a deformation portion. The end surface of a magnetic pole of a stator covers a region slightly greater than that covered by a salient pole portion of a rotor and causes a change in reluctance in cooperation with the salient pole portion.

When a salient pole portion faces the end surface of a magnetic pole of a stator, magnetic flux passes mainly between the end surface and a top portion (a portion most distant from the axis of the rotor) of the salient pole portion. When a circumferential portion of the rotary shaft portion located on a side opposite the salient pole portion faces the end surface of the magnetic pole, magnetic flux passes mainly between the end surface and the circumferential portion of the rotary shaft portion. When the deformation' portion faces the end surface of a magnetic pole, magnetic flux passes mainly between the end surface and slightly bulging portions of the rotary shaft portion located on opposite sides of the deformation portion in relation to the axial direction.

As a result, reluctance can vary with the rotational angle of the rotor in a sinusoidal manner.

### Embodiment 6:

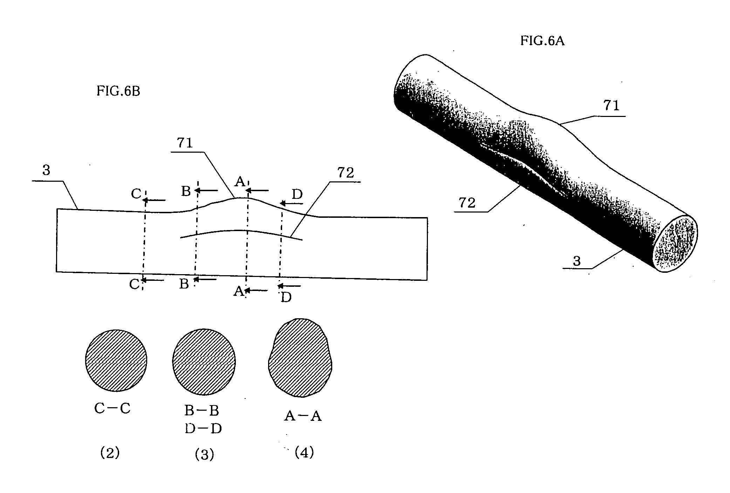

FIG. 6 is a pair of configurational views showing a rotor of the present invention formed through punch-deforming operation.
FIG. 6A is a perspective view of a rotor; and FIG. 6B is a sectional view of the rotor, showing cross sections taken at longitudinal positions.

As shown in FIG. 6A, a deformation portion 72 is formed, by means of a punch, on the rod piece 3 along the length of the rod piece 3 in such a manner as to be slightly curved toward a portion of the rod piece 3 that will bulge. As a result, a rounded bulge 71 is formed.

As shown in FIG. 6B (2), a cross section of the rod piece 3 taken along a line C―C, which passes through a portion of the rod piece 3 located away from the bulge 71, assumes a circular shape. As shown in FIG. 6B (4), a cross section of the rod piece 3 taken along a line A―A, which passes through the top of the bulge 71, bulges arcuately in contrast to the cross section (in a circular shape) taken along a line C―C. The arcuate shape is formed in such a manner that its contour varies with the rotational angle of the rotor in a sinusoidal manner, whereby the bulge 71 serves as a salient pole portion. As shown in FIG. 6B (3), a cross section of a skirt portion of the bulge 71; i.e., a cross section of the rod piece 3 taken along a line B―B or a line D―D, assumes an intermediate shape between the above two cross sections.

Since the above-mentioned working method allows use of an existing inexpensive material, such as a round bar stock, manufacturing cost can be reduced. Since a salient pole portion assumes the shape of a mound, the entire mound can be used to create reluctance characteristics while eliminating an adverse effect of an edge involved in a conventional flat salient pole portion.

### Embodiment 7:

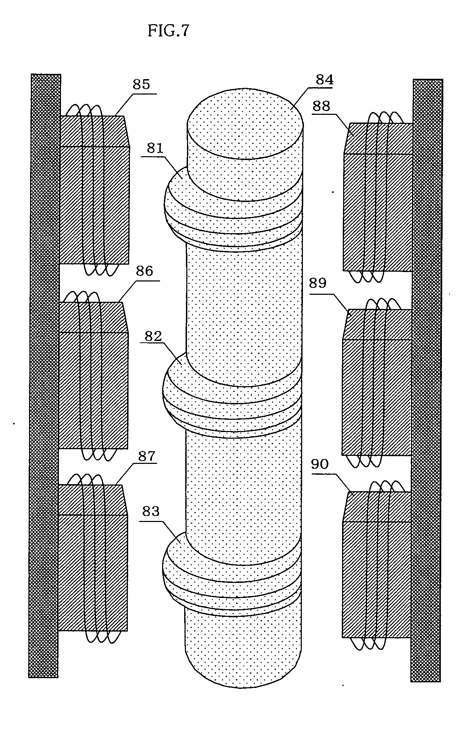

FIG. 7 is a configurational view showing a VR resolver of the present invention having a rotary shaft portion and a plurality of salient pole portions formed integrally, in which the rotor of the VR resolver is shown in a perspective view, and the stator of the VR resolver is shown in a sectional view.

An arbitrary number of salient pole portions are formed, by one of the above-described working methods, on a rotary shaft portion 84 in such a manner as to be arranged at predetermined longitudinal intervals. In the present embodiment, three salient pole portions; namely, 81, 82, and 83, are provided. The salient pole portions 81, 82, and 83 are combined with stator portions 85, 86, 87, 88, 89, and 90, whereby a plurality of resolver units are arranged along the rotational axis of the rotor.

A resolver unit is a combination of a stator having magnetic poles with windings (excitation winding, sine output winding, and cosine output winding) and a rotor having a rotary shaft portion and a salient pole portion formed integrally.

Provision of a plurality of resolver units on a single rotary shaft brings the following advantages. For example, in measurement of torsion of a rotary shaft, a conventional method requires attachment of a required number of resolvers to the rotary shaft. However, the present embodiment eliminates such troublesome work. Since a rotary portion and salient pole portions are formed integrally, the structure is simplified, and a single housing can accommodate a plurality of resolver units. Also, positioning is not required for salient pole portions in relation to a rotary shaft portion, thereby facilitating manufacture.

The features disclosed in the foregoing description, in the claims and/or in the accompanying drawings may, both separately and in any combination thereof, be material for realising the invention in diverse forms thereof.

## Claims

1. A variable reluctance resolver comprising a rotor having a rotary shaft portion and a salient pole portion integrally formed on the rotary shaft portion.

2. A variable reluctance resolver according to claim 1, wherein the salient pole portion assumes a salient pole profile corresponding to a shaft angle multiplier.

3. A variable reluctance resolver according to claim 1, wherein two or more salient pole portions are formed on the rotary shaft portion along a length of the rotary shaft portion.

4. A variable reluctance resolver according to claim 1, wherein the salient pole portion is a portion of the rotary shaft portion that is caused to bulge and assumes the form of a bulge.

5. A variable reluctance resolver according to claim 4, wherein the bulge assumes a plate-like shape.

6. A method for manufacturing a variable reluctance resolver recited in claim 1, the method comprising the step of integrally casting the rotary shaft portion and the salient pole portion.

7. A method for manufacturing a variable reluctance resolver recited in claim 1, the method comprising the step of integrally sintering the rotary shaft portion and the salient pole portion.

8. A method for manufacturing a variable reluctance resolver recited in claim 1, the method comprising the step of forging a rod piece into the rotor having the rotary shaft portion and the salient pole portion formed integrally.

9. An apparatus for manufacturing a variable reluctance resolver recited in claim 1 through swaging, comprising a die having a concave portion corresponding to the salient pole portion, the concave portion facing a through-hole formed in the die, and a rod piece being inserted into the through-hole and being subjected to swaging.
